(19) Europäisches Patentamt
European Patent Office
Office européen des brevets

(11) Numéro de publication : **0 044 089**
**B1**

(12) # FASCICULE DE BREVET EUROPÉEN

(45) Date de publication du fascicule du brevet : **11.05.83**

(51) Int. Cl.³ : **C 07 F 9/40**

(21) Numéro de dépôt : **81106934.3**

(22) Date de dépôt : **27.11.79**

(60) Numéro de publication de la demande initiale en application de l'article 76 CBE : **0013200**

(54) **Nouveaux diesters d'acides bis (hydroxy-4 phényl) alkylphosphoniques.**

(30) Priorité : **20.12.78 FR 7835753**

(43) Date de publication de la demande : **20.01.82 Bulletin 82/03**

(45) Mention de la délivrance du brevet : **11.05.83 Bulletin 83/19**

(84) Etats contractants désignés : **DE IT NL**

(56) Documents cités :
**FR A 2 048 493**
**US A 3 702 879**
**POLYMER BULLETIN, vol. 1, 1979, P. POISSON et al. : « The Fire-Resistance Properties of Polycarbonates. I. New Fire-Resistant Polycarbonates Containing Phosphonic Acid Diester Groups », pages 883-895**

(73) Titulaire : **ATO CHIMIE**
**La Défense 5 12/16 Allée des Vosges**
**F-92400 Courbevoie (FR)**

(72) Inventeur : **Poisson, Pierre**
**28 "Les Logis" Avenue du Président Kennedy**
**F-27300 Bernay (FR)**
Inventeur : **Sturtz, Georges**
**22, rue Léon Blum**
**F-29200 Brest (FR)**

(74) Mandataire : **Boillot, Marc**
**SOCIETE NATIONALE ELF AQUITAINE Département Propriété Industrielle Tour Aquitaine - Cedex No 4**
**F-92080 Paris la Défense (FR)**

**EP 0 044 089 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

Nouveaux diesters d'acides bis(hydroxy-4 phenyl) alkylphosphoniques

La présente invention concerne de nouveaux diesters d'acides bis(hydroxy-4 phényl) alkylphosphoniques de formule générale

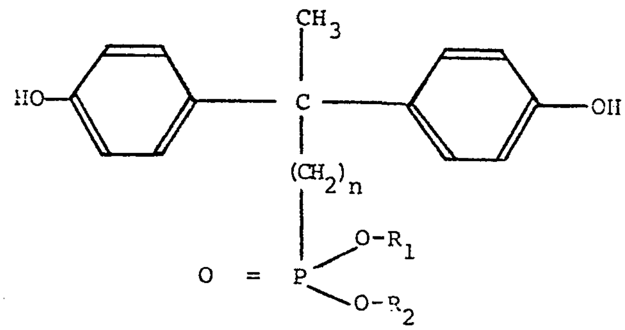

dans laquelle

n est un nombre entier égal à 1, 2 ou 3, et

$R_1$ et $R_2$ représentent chacun un radical cyclohexyle ou un radical hydrocarboné aliphatique ayant un nombre d'atomes de carbone allant de 1 à 6.

Des diesters phosphoniques d'une structure similaire à celle de la formule précitée ont été décrits par Spivack dans le brevet BE 750 593. Mais les diesters préparés par Spivack comportent plusieurs substitutions aliphatiques ou alicycliques sur les noyaux phényles créant ainsi une structure encombrée qui rend ces produits inaptes à la polycondensation.

Les nouveaux diesters phosphoniques de bis(hydroxy-4 phényl) de propyle, butyle ou de pentyle peuvent être obtenus par action des β, γ ou δ cétophosphonates avec du phénol en présence d'un acide de LEWIS, de préférence le trifluorure de bore selon le processus réactionnel suivant

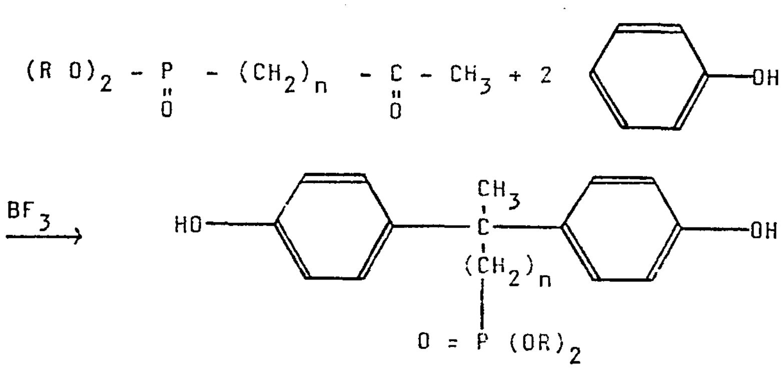


Comme diesters d'acides cétophosphoniques également appelés oxoalkyl phosphonates, on peut utiliser par exemple : l'oxo-2-propylphosphonate de diméthyle, l'oxo-2-propylphosphonate de diéthyle, l'oxo-3-butyl phosphonate de diéthyle, l'oxo-4-pentylphosphonate de diéthyle, l'oxo-2-propylphosphonate de dicyclohexyle.

Pour préparer les bis(hydroxy-4 phényl)alkylphosphonates de dialkyles selon l'invention, on mélange l'oxoalkylphosphonate avec le phénol et dans un rapport molaire phénol/oxoalkylphosphonate de 4 à 8 et on fait barboter dans ce mélange le trifluorure de bore jusqu'à saturation en maintenant la température entre 10 et 30 °C, de préférence entre 15 et 25 °C, puis on élève la température aux environs de 40 à 50 °C et la réaction de condensation s'effectue à pression ordinaire pendant 30 à 60 minutes. Quand la réaction est terminée, on dilue le produit dans l'acide acétique, et on ajoute de l'eau qui précipite un produit huileux durcissant lentement.

Le produit solidifié est lavé à l'eau, essoré, séché. La poudre obtenue est purifiée par recristallisation dans un solvant ou un mélange de solvants convenable.

En traitant ces bis(hydroxy-4 phényl) alkylphosphonates de dialkyle par une solution alcoolique de 10 à 20 % en poids d'un hydroxyde alcalin dans un rapport molaire hydroxyde alcalin/diester allant de 3,2 à 3,5 ou encore par une solution cétonique saturée d'un iodure alcalin dans un rapport molaire iodure/diester allant de 1,5 à 2,5, on forme les hémi-esters phosphoniques alcalins correspondants.

Les hémiesters alcalins ainsi formés, peuvent être utilisés comme antioxydants, stabilisants, ignifugeants de matière organiques et en particulier de matières plastiques.

Leur caractère phénolique difonctionnel permet d'envisager leur emploi comme monomère ou comonomère de polycondensation pour conduire à des polymères tels que polyéthers, polycarbonates, résines époxydes obtenus à partir de diphénols.

La présence de l'ion phosphonique peut donner à de tels matériaux plastiques des caractères internes de stabilisation, d'ignifugation, d'échange ionique ou d'agents complexants pour les métaux.

Les exemples suivants sont donnés à titre illustratif et non limitatif.

Dans ces exemples, les produits sont identifiés par analyse élémentaire, spectre infra-rouge, et spectre RMN.

## Exemple 1

Bis(hydroxy-4 phényl)-2,2 propylphosphonate de diméthyle.

On sature 370 gr de phénol (3,97 moles) en $BF_3$ entre 20 et 25 °C, puis on introduit goutte à goutte en 30 minutes 108 gr d'oxo-2 propylphosphonate de diméthyle (0,65 mole) tout en maintenant la température inférieure à 20 °C. Puis on laisse la réaction s'effectuer à température ambiante. La température du milieu réactionnel monte jusqu'à 30 à 35° et se maintient dans cet intervalle de température pendant une heure sans qu'il soit nécessaire de chauffer. Au bout d'une heure on porte à 40 °C le milieu réactionnel qui est maintenu à cette température pendant 30 minutes. Puis on refroidit et on dilue avec 320 ml d'acide acétique et la solution acétique est versée dans 7 l d'eau. L'huile obtenue se solidifie en 20 heures environ. Le solide obtenu est lavé à l'eau, essoré, séché, et on obtient 184 gr d'un produit brut légèrement coloré qui est redissout dans le dioxane à reflux puis cristallisé par addition d'eau, essoré après refroidissement à l'aide de glace et séché. On obtient avec un rendement molaire de 75 % une poudre blanche qui fond à 185 °C.

Analyse élémentaire $C_{17}H_{21}PO_5$

| | C | H | P |
|---|---|---|---|
| % calculé | 60,71 | 6,25 | 9,22 |
| % trouvé | 60,77 | 6,21 | 8,34 |

Spectre Infrarouge

$\nu$ OH = 3 300 $cm^{-1}$
$\nu$ P=O = 1 225 $cm^{-1}$
$\nu$ P − O − C = 1 050, 1 020 $cm^{-1}$

Spectre RMN du Proton (solvant DMSO deutéré) DMSO = diméthylsulfoxyde

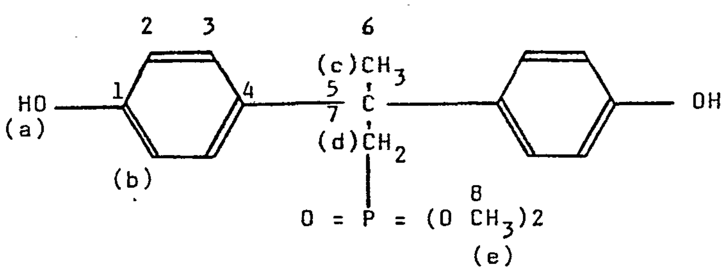

| | | | |
|---|---|---|---|
| δ = 9,16 | ppm (s) | 2Ha | |
| δ = 7,15 − 6,55 | ppm (m) | 8Hb | |
| δ = 3,28 | ppm (d) | 6He, | JP − He = 11 Hz |
| δ = 2,62 | ppm (d) | 2Hd, | JP − Hd = 20 Hz |
| δ = 1,76 | ppm (s) | 3Hc | |

Spectre R M N du $13_C$ (solvant DMSO deutéré)

| | |
|---|---|
| δ = 156,6 | ppm $C_1$ |
| δ = 140,8 − 141,6 | ppm $C_4$ |
| δ = 129,3 | ppm $C_3$ |
| δ = 116,1 | ppm $C_2$ |
| δ = 52,9 | ppm $C_8$ |
| δ = 43,86 | ppm $C_5$ |
| δ = 34 | ppm $C_7$ |
| δ = 30 | ppm $C_6$ |

A partir du diester obtenu, on prépare également les hémi-esters correspondants de sodium et de potassium :

a) Bis(hydroxy-4 phényl)-2,2 propylphosphonate de méthyle et de sodium

Dans un ballon muni d'un agitateur, d'un condensateur à reflux, d'un thermomètre et d'une introduction d'azote on dissout 33,6 g (0,1 mole) de bis (hydroxy-4 phényl)-2,2 propylphosphonate de diméthyle dans une solution alcoolique de soude préparée en dissolvant 0,3 mole de soude dans 27 ml d'eau et 100 ml de méthanol.

Après avoir fait passer un courant d'azote dans le mélange, on porte au reflux pendant 24 heures, on refroidit à température ambiante, on neutralise avec HC1 concentré jusqu'à pH7 sous refroidissement. Ensuite on concentre sous pression réduite. Le résidu sec est dissout dans une faible quantité de méthanol et on filtre le chlorure de sodium précipité ; le filtrat est ensuite concentré sous pression réduite puis séché à 150-160 °C sous vide de 1 mm de $H_g$.

On obtient 32,3 g (rendement 95 %) d'une poudre blanche, hygroscopique qui se décompose vers 220-225 °C.

L'analyse élémentaire donne les résultats suivants pour le sodium et phosphore.

| | % trouvé | % calculé |
|---|---|---|
| Na | 6,93 | 6,68 |
| P | 8,9 | 9,01 |

Dosage effectué par fluorescence X pour le phosphore.

Spectre RMN du proton dans $D_2O$ comme solvant

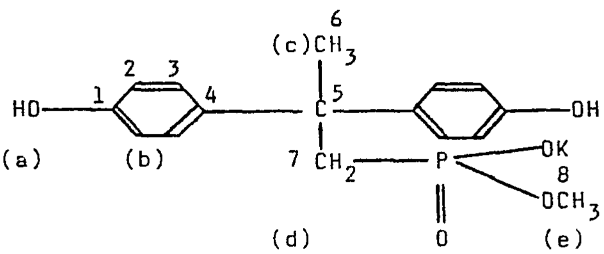

δ = 7,3 − 6,7 ppm (m) 8Hb
δ = 3,20 ppm (d) 3He ; JP − He = 10,5 Hz
δ = 2,62 ppm (d) 2Hd ; JP − Hd = 21,6 Hz
δ = 1,83 ppm (s) 3Hc

L'intégration confirme bien la présence d'un seul groupement méthoxy $OCH_3$.

RMN du proton dans DMSO deutéré

δ = 10 − 9 ppm protons Ha phénoliques
δ = 3,02 ppm (d) $H_e$

RMN du $^{13}C$ ($D_2O$)

δ = 155,7 ppm $C_1$
δ = 144,5 ; 145,2 ppm $C_4$
δ = 130,9 ppm $C_3$
δ = 117,34 ppm $C_2$
δ = 53,7 ppm $C_8$
δ = 45,22 ppm $C_5$
δ = 36,4 ppm $C_7$
δ = 30,4 ppm $C_6$

b) Bis(hydroxy-4 phényl)-2,2 propylphosphonate de méthyle et de potassium

On dissout 8,4 g (0,025 mole) de bis(hydroxy-4 phényl)-2,2 propylphosphonate de diméthyle dans 118 ml d'une solution de potasse 2,6 N dans le méthanol. On porte au reflux pendant 28 heures. On procède ensuite, pour isoler le produit, comme dans l'exemple 1a.

Le produit obtenu se décompose à 235 °C

Analyse élémentaire $C_{16}H_{18}PO_5K$

| | P | K |
|---|---|---|
| % calculé | 8,61 | 10,83 |
| % trouvé | 8,10 | 9,42 |

RMN du proton dans $D_2O$

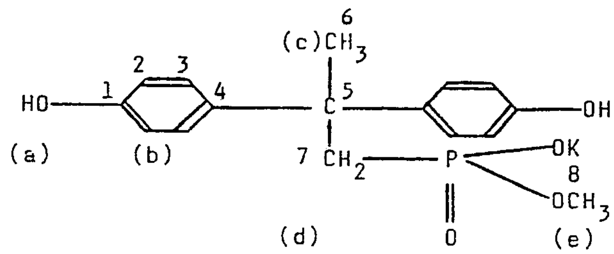

δ = 7,3 – 6,75 ppm (m) 8Hb
δ = 3,20 6 ppm (d) 3He JP – He = 10,5 Hz
δ = 2,60 6 ppm (d) 2Hd JP – Hd = 18Hz
δ = 1,82 6 ppm (s) $3H_c$

RMN du proton dans DMSO d6

Les protons phénoliques Ha sortent entre 10,5 et 9,5 ppm.
δ = 3,10 ppm (d) 3He JP – He = 10,5 Hz

RMN du Carbone 13 dans $D_2O$

| | | |
|---|---|---|
| δ = 155,7 | 2 ppm | $C_1$ |
| δ = 145,3 | – 144,6 ppm | $C_4$ |
| δ = 130,9 | ppm | $C_3$ |
| δ = 117,2 | ppm | $C_2$ |
| δ = 53,73 | – 53,34 ppm | $C_8$ |
| δ = 45,22 | ppm | $C_5$ |
| δ = 36,38 | ppm | $C_7$ |
| δ = 30,40 | ppm | $C_6$ |

## Exemple 2

Préparation du bis(hydroxy-4 phényl)-2,2 propylphosphonate de diéthyle

On mélange 97 g d'oxo-2 propylphosphonate de diéthyle (0,5 mole) et 282 g de phénol (3 moles)

On amène la température par refroidissement aux environs de 10 à 15 °C et on fait barboter du trifluorure de bore jusqu'à saturation tout en maintenant la température du milieu inférieure à 25 °C. Le milieu réactionnel qui a une teinte orangée est chauffé à 40 °C pendant une heure, au cours de laquelle il devient de plus en plus visqueux et prend une teinte rouge violacée. On refroidit et on dissout la masse réactionnelle dans environ 250 ml d'acide acétique ; puis on verse la solution acétique dans 6 litres d'eau.

Une huile jaune se sépare et durcit très lentement en 48 heures.

Le produit solidifié est broyé, lavé plusieurs fois à l'eau sous agitation, essoré et séché. On obtient une poudre légèrement colorée qui est recristallisée dans un mélange d'acétate d'éthyle/cyclohexane dans la proportion 1 : 2. On obtient avec un rendement molaire de 69 %, 126 gr. d'une poudre blanche qui fond à 152 °C et dont les spectres IR et RMN ainsi que l'analyse élémentaire confirment la structure chimique suivante :

(Voir formule page 6)

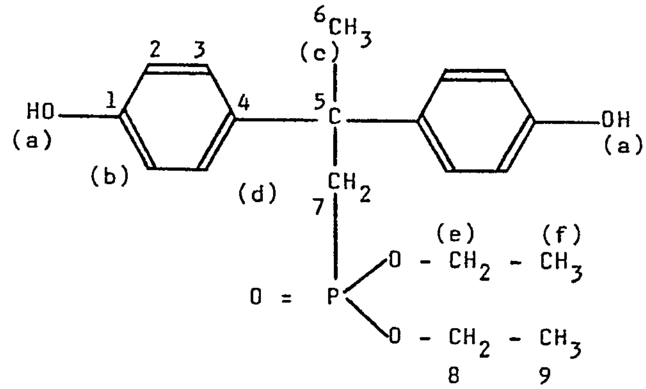

Analyse élémentaire $C_{19}H_{25}PO_5$

| | C | H | P |
|---|---|---|---|
| % calculé | 62,63 | 6,86 | 8,51 |
| % trouvé | 62,61 | 6,88 | 8,49 |

Analyse infrarouge

| | |
|---|---|
| ν OH | = 3 300 $cm^{-1}$ |
| ν CH aromatique | = 3 100 $cm^{-1}$ |
| ν P = O | = 1 255 $cm^{-1}$ |
| ν P – O – C | = 1 060 $cm^{-1}$ |
| | 1 025 $cm^{-1}$ |
| | 960 $cm^{-1}$ |
| δ CH aromatique | 830 $cm^{-1}$ |

Spectre RMN$^1$H (solvant DMSO deutéré)

| | | | |
|---|---|---|---|
| δ = 8,6 | ppm (s) | 2 Ha | |
| δ = 7,2 6,6 | ppm (m) | 8 Hb | |
| δ = 3,9 | ppm (q) | 4 He | |
| δ = 2,72 | ppm (d) | 2 Hd, JP – Hd = 19 Hz | |
| δ = 1,9 | ppm (s) | 3 Hc | |
| δ = 1,15 | ppm (t) | 6 Hf | |

Spectre $^{13}$C (DMSO deutéré)

| | | |
|---|---|---|
| δ = 156,7 | ppm | $C_1$ |
| δ = 141,6-140,8 | ppm | $C_4$ |
| δ = 129,3 | ppm | $C_3$ |
| δ = 115,9 | ppm | $C_2$ |
| δ = 61,9 | ppm | $C_8$ |
| δ = 43,9 | ppm | $C_5$ |
| δ = 30,2 | ppm | $C_6$ |
| δ = 34,7 | ppm | $C_7$ |
| δ = 17,86-17,41 | ppm | $C_9$ |

## Exemple 3

Préparation du bis(hydroxy-4 phényl)-3,3 butylphosphonate de diméthyle

On procède comme dans l'exemple 1. Le produit obtenu ($R^t$ = 86 %) présente les caractéristiques suivantes : Point de fusion 170 °C.

Analyse élémentaire $C_{18}H_{23}PO_5$

| | C | H | P |
|---|---|---|---|
| % calculé | 61,71 | 6,57 | 8,85 |
| % trouvé | 61,36 | 6,50 | 8,48 |

Spectre infrarouge

$\nu$ OH = 3 290 $cm^{-1}$
$\nu$ P = O = 1 225 $cm^{-1}$

Spectre RMN du Proton (solvant DMSO deutéré)

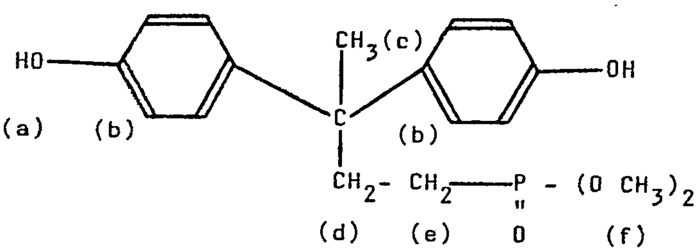

| | | |
|---|---|---|
| $\delta$ = 9,33 | ppm (s) | 2 Ha |
| $\delta$ = 7,1 6,5 | ppm (m) | 8 Hb |
| $\delta$ = 3,58 | ppm (d) 6Hf, JP − HF = | 10 Hz |
| $\delta$ = 2,3-1,6 | ppm (m) 2Hd + | 2 He |
| $\delta$ = 1,5 | ppm (s) | 3Hc |

Exemple 4

Préparation du bis(hydroxy-4 phényl)-4,4 pentylphosphonate de diéthyle.

On procède comme dans l'exemple 1. Le produit obtenu par recristallisation dans un mélange acétate d'éthyle/cyclohexane présente les caractéristiques suivantes :
Point de fusion 115 °C

Analyse élémentaire $C_{21}H_{29}PO_5$

| | C | H | P |
|---|---|---|---|
| % calculé | 4,28 | 7,39 | 7,90 |
| % trouvé | 64,36 | 7,52 | 7,84 |

Spectre infrarouge

$\nu$ P = O = 1 225 $cm^{-1}$

Spectre RMN du Proton (solvant DMSO deutéré)

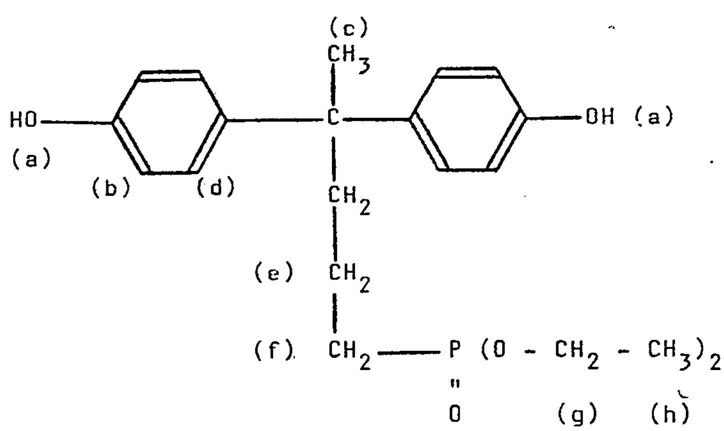

$\delta$ = 10 ppm (s) 2Ha
$\delta$ = 7-6,5 ppm (m) 8 Hb
$\delta$ = 3,85-6ppm (m) 4 Hg
$\delta$ = 1,45-6ppm (s) 3 Hc
$\delta$ = 1,15-6ppm (t) 6 Hh
Les protons Hd + He + Hf donnent un massif complexe entre 2,3 et 1,6 ppm et sous les protons Hc et Hh.

**Revendications**

1. Diesters d'acides bis(hydroxy-4-phényl)alkyl phosphoniques de formule

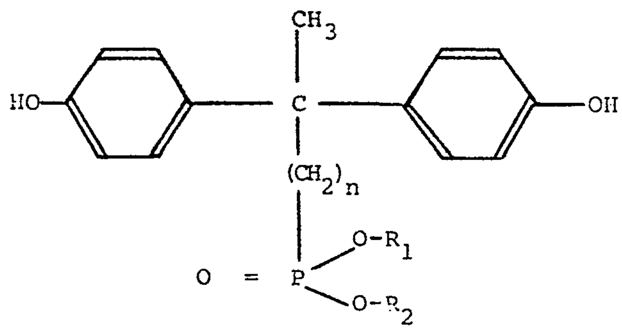

dans laquelle

n est un nombre entier égal à 1, 2 ou 3, et

$R_1$ et $R_2$ représentent chacun un radical cyclohexyle ou un radical hydrocarboné aliphatique ayant un nombre d'atomes de carbone allant de 1 à 6.

2. Un diester selon la revendication 1, ledit composé étant le bis(hydroxy-4 phényl)-2,2 propylphosphonate de diméthyle.

3. Un diester selon la revendication 1, ledit composé étant le bis(hydroxy-4 phényl)-2,2 propylphosphonate de diéthyle.

4. Un diester selon la revendication 1, ledit composé étant le bis(hydroxy-4 phényl)-3,3 butylphosphonate de diméthyle.

5. Un diester selon la revendication 1, ledit composé étant le bis(hydroxy-4 phényl)-4,4 pentylphosphonate de diéthyle.

**Claims**

1. Diesters of bis-(4-hydroxyphenyl)-alkylphosphonic acids of the formula

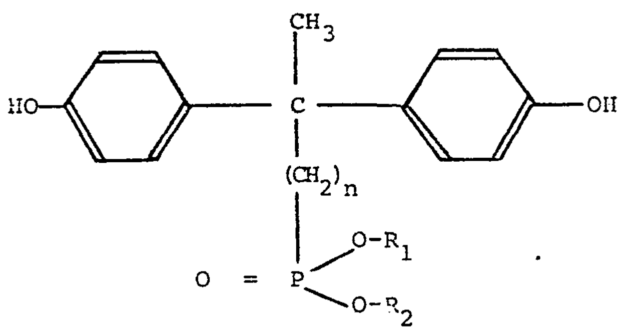

in which

n is equal to 1, 2 or 3, and

$R_1$ and $R_2$ represent each a cyclohexyl radical or an aliphatic hydrocarbon radical containing 1 to 6 carbon atoms.

2. A diester according to claim 1, consisting of dimethyl 2,2-bis-(4-hydroxyphenyl)-propylphosphonate.

3. A diester according to claim 1, consisting of diethyl 2,2-bis-(4-hydroxyphenyl)-propylphosphonate.

4. A diester according to claim 1, consisting of dimethyl 3,3-bis-(4-hydroxyphenyl)-butylphosphonate.

5. A diester according to claim 1, consisting of diethyl 4,4-bis-(4-hydroxyphenyl)-pentylphosphonate.

**Ansprüche**

1. Diester von Bis-(4-hydroxyphenyl)-alkylphosphonsäuren der Formel

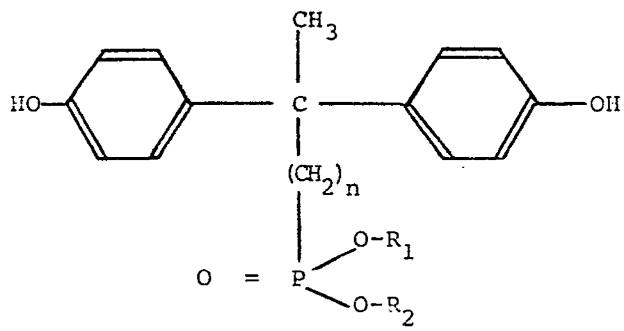

worin

n die Zahlen 1,2 oder 3 bedeutet, und

$R_1$ und $R_2$ je Cyclohexyl oder ein alifatisches Kohlenwasserstoffradikal mit 1 bis 6 Kohlenstoffatomen darstellen.

2. Diester nach Anspruch 1, dadurch gekennzeichnet, dass er ein Dimethyl-bis-(4-hydroxyphenyl)-2,2 propylphosphonat darstellt.

3. Diester nach Anspruch 1, dadurch gekennzeichnet, dass er ein Diäthyl-bis-(4-hydroxyphenyl)-2,2 propylphosphonat darstellt.

4. Diester nach Anspruch 1, dadurch gekennzeichneit, dass or ein Dimethyl-bis-(4-hydroxyphenyl)-3, 3 butylphosphonat darstellt.

5. Diester nach Anspruch 1, dadurch gekennzeichnet, dass er ein Diäthyl-bis-(4-hydroxyphenyl)-4,4 pentylphosphonat darstellt.